# EUROPEAN PATENT APPLICATION

(11) **EP 1 808 828 A2**
(43) Date of publication of application: **18.07.2007**
(21) Application number: 06253045.6
(22) Date of filing: 13.06.2006
(51) Int. Cl.: G07D 11/00

(54) **Method of operating a check depositing terminal and an apparatus therefor**

(30) Priority: 16.12.2005 US 305753
(71) Applicant: NCR International, Inc., Dayton, Ohio 45479 (US)
(72) Inventor: Carreon, Susan F., Kitchener, Ontario N2N 3H6 (CA); Norris, Donna D., Cambridge, Ontario N1S 5B5 (GB)
(74) Representative: Williamson, Brian

(57) **Abstract**

A method is provided of operating an image-based check depositing terminal. The method comprises capturing an image of a physical check provided by a user at the check depositing terminal, and perforating the physical check after the image of the check has been captured.

## Description

The present invention relates to depositing of checks, and is particularly directed to a method of operating a check depositing terminal, such as an image-based check depositing automated teller machine (ATM), and an apparatus therefor.

In a typical known check depositing ATM, an ATM customer is allowed to deposit a check (without having to place the check in any deposit envelope) in a publicly accessible, unattended environment. To deposit a check, the ATM customer inserts a user identification card through a user card slot at the ATM, enters the amount of the check being deposited, and inserts the check to be deposited through a check slot. A check transport mechanism receives the inserted check and transports the check in a forward direction along a check transport path to a number of locations within the ATM to process the check.

If the check is not accepted for deposit, the check transport mechanism transports the check in a reverse direction along the check transport path to return the check to the ATM customer via the check slot. If the check is accepted for deposit, the amount of the check is deposited into the ATM customer's account and the check is transported to a storage bin within the ATM. An endorser printer prints an endorsement onto the check as the check is being transported to and stored in the storage bin. Checks in the storage bin within the ATM are periodically picked up and physically transported via courier to a back office facility of a financial institution for further processing.

The typical endorser printer requires a print carriage, ink, and other ink supplies, such as ribbons or print heads, to print the endorsement onto the check. Ongoing maintenance of the endorser printer is needed to maintain reliable, legible endorsements on checks. For examples, the ink needs to be refilled and ink supplies need to be replaced from time to time. Material costs and labor costs associated with ongoing maintenance of the endorser printer are usually relatively high.

In accordance with an embodiment of the present invention, a method is provided of operating an image-based check depositing terminal. The method comprises capturing an image of a physical check provided by a user at the check depositing terminal, and perforating the physical check after the image of the check has been captured.

Embodiments of the present invention will now be described, by way of example, with reference to the accompanying drawings, in which:
Fig. 1 is a left-front perspective view of an image-based check depositing automated teller machine (ATM) embodying the present invention;
Fig. 2 is a simplified schematic sectional diagram, taken approximately along line 2-2 in Fig. 1, and showing a part (a check processing module) of the ATM of Fig. 1;
Fig. 3 is an elevational view of the check processing module of Fig. 2, looking approximately in the direction of arrow X in Fig. 1, and showing some parts removed and some parts only schematically;
Fig. 4 is a perspective view of a transport unit used in the check processing module of Fig. 3, looking approximately down and towards the right from the upper left portion of Fig. 3;
Fig. 5 is an enlarged view of a perforator mechanism used in the transport unit of Fig. 4; and
Fig. 6 is a flowchart illustrating steps involved in a check depositing operation.

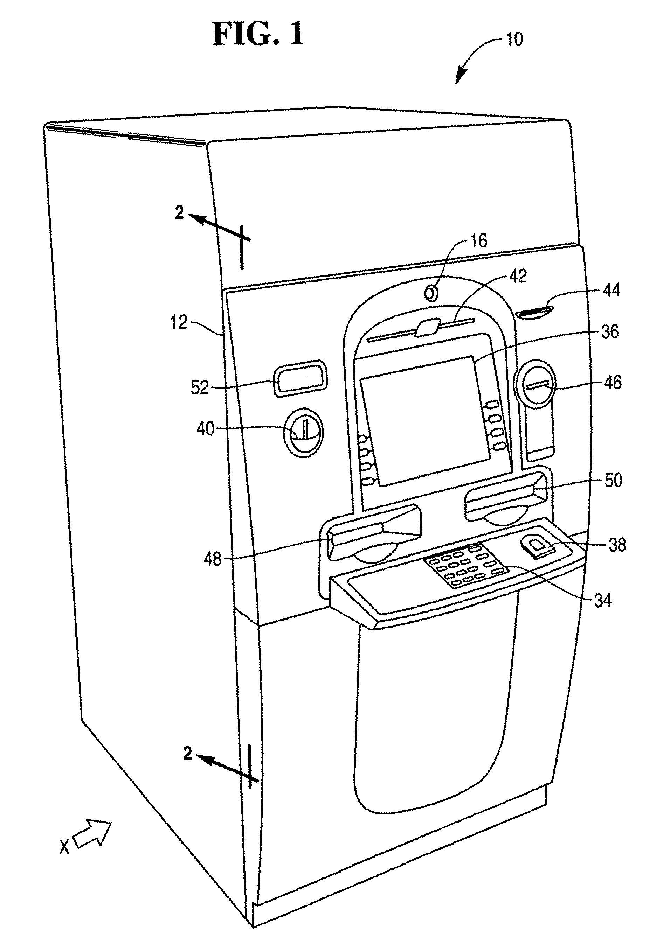

Referring to Fig. 1, a check depositing terminal in the form of an image-based check depositing automated teller machine (ATM) 10 is illustrated. The check depositing ATM 10 comprises a fascia 12 coupled to a chassis (not shown). The fascia 12 defines an aperture 16 through which a camera (not shown) images a customer of the ATM 10. The fascia 12 also defines a number of slots for receiving and dispensing media items, and a tray 40 into which coins can be dispensed. The slots include a statement output slot 42, a receipt slot 44, a card reader slot 46, a cash slot 48, another cash slot 50, and a check input/output slot 52. The slots 42 to 52 and tray 40 are arranged such that the slots and tray align with corresponding ATM modules mounted within the chassis of the ATM 10.

The fascia 12 provides a user interface for allowing an ATM customer to execute a transaction. The fascia 12 includes an encrypting keyboard 34 for allowing an ATM customer to enter transaction details. A display 36 is provided for presenting screens to an ATM customer. A fingerprint reader 38 is provided for reading a fingerprint of an ATM customer to identify the ATM customer. The user interface features described above are all provided on an NCR PERSONAS (trademark) 6676 ATM, available from NCR Financial Solutions Group Limited, Discovery Centre, 3 Fulton Road, Dundee, DD2 4SW, Scotland.

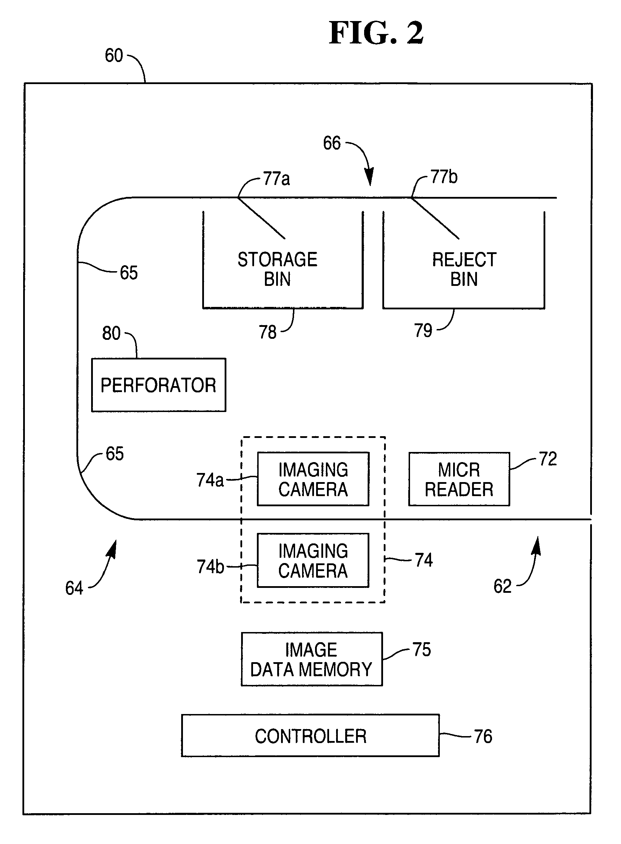

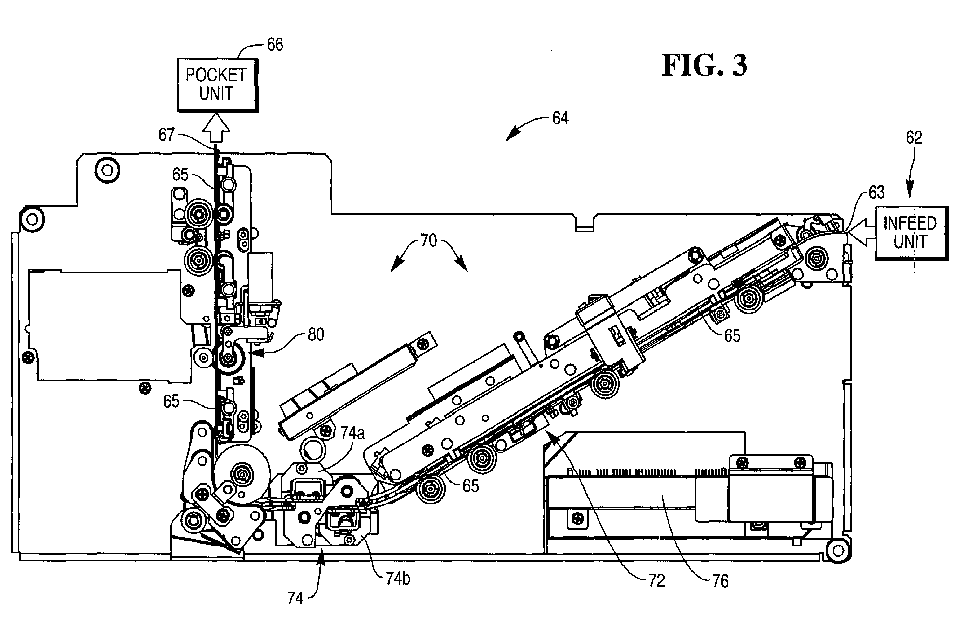

A check processing module (CPM) 60 will now be described with reference to Fig. 2 and Fig. 3. Fig. 2 is a simplified schematic sectional diagram (along line 2-2 in Fig. 1) showing part of the fascia 12 and the main parts of the CPM 60. Fig. 3 is an elevational view of the check processing module of Fig. 2, looking approximately in the direction of arrow X in Fig. 1, and showing some parts removed and some parts only schematically. The CPM 60 is a modified version of a conventional check processing module, such as the check processing module provided with the PERSONAS (trademark) 6676 NCR ATM.

The CPM 60 comprises three main units (Fig. 3) which includes an infeed unit 62, a transport unit 64, and a pocket unit 66. The infeed unit 62 receives a check which has been deposited into the check input/output slot 42, and transports the check to an inlet 63 of the transport unit 64. The dimensions of the infeed unit 62, such as its run length, may vary depending upon the particular model ATM the CPM 60 is installed. The structure and operation of the infeed unit 62 are conventional and well known and, therefore, will not be described.

The transport unit 64 includes a check input/output transport mechanism 70 which includes an alignment mechanism for aligning a check. The transport mechanism 70 receives a check from the inlet 63, and transports the check along a document track 65 to an outlet 67 of the transport unit 64. The transport unit 64 further includes a magnetic ink character recognition (MICR) head 72 for reading magnetic details on a code line of a check. The transport unit 64 also includes an imager 74 including an upper 74a and lower 74b imaging camera for capturing an image of each side of a check (front and rear). An image data memory 75 is provided for storing images of checks. A controller 76 is provided for controlling the operation of the elements within the CPM 60.

The pocket unit 66 includes a storage bin 78 for storing processed checks. The pocket unit 66 further includes a reject bin 79 for storing rejected checks. Two divert gates 77a, 77b are provided for diverting checks to either the storage bin 78 or the reject bin 79. The structure and operation of the pocket unit 66 are conventional and well known and, therefore, will not be described.

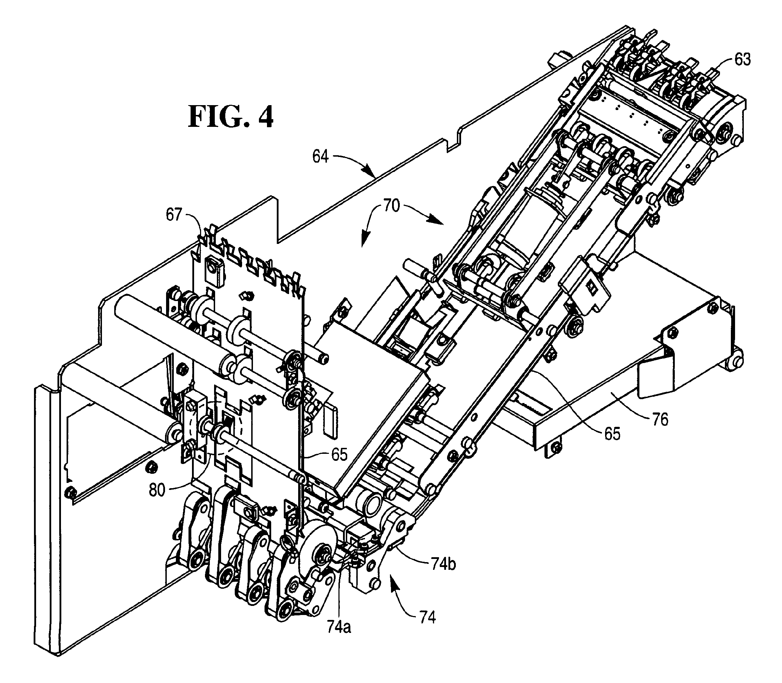

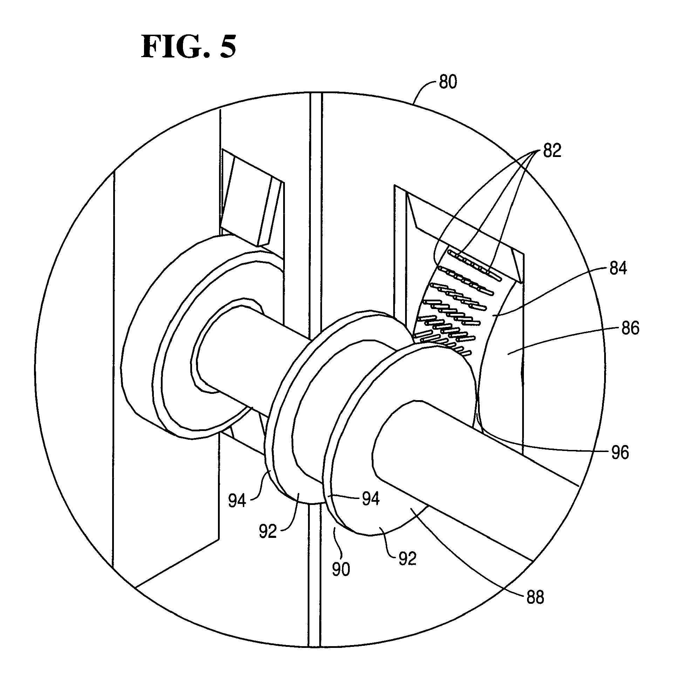

Referring to Figs. 3, 4, and 5, a perforator mechanism 80 is provided for punching openings in a check. As best shown in Fig. 5, the perforator mechanism 80 includes a series of projections 82 which are mounted on an outer circumferential surface 84 of a perforator roller 86. The series of projections 82 may be in the form of pins or studs, for examples. The perforator roller 86 faces a receiving roller 88 which has a groove 90 formed between a pair of disc-shaped portions 92. Each of the disc-shaped portions 92 has an outer circumferential surface 94 which faces the outer circumferential surface 84 of the perforator roller 86. The projections 82 of the perforator roller 86 project into the groove 90 of the receiving roller 88.

When a check is transported along the document track 65 and enters the nip 96 between the perforator roller 86 and the receiving roller 88, the outer edges of the outer circumferential surface 84 of the perforator roller and the outer circumferential surfaces 94 of the pair of disc-shaped portions 92 of the receiving roller grip the check to transport the check through the nip. As the check is transported through the nip 96, the projections 82 of the perforator roller 86 pierces the check to make openings in the check. The openings in the check may be in the form of holes, for example. The openings in the check may form a pattern which spells any number of words which can be read by a person. For example, the pattern of the openings in the check may spell the word "VOID" a number of times along the length of the check. The number of times the word appears along the length of the check will depend upon a number of factors, such as the diameter of the perforator roller 86, for example.

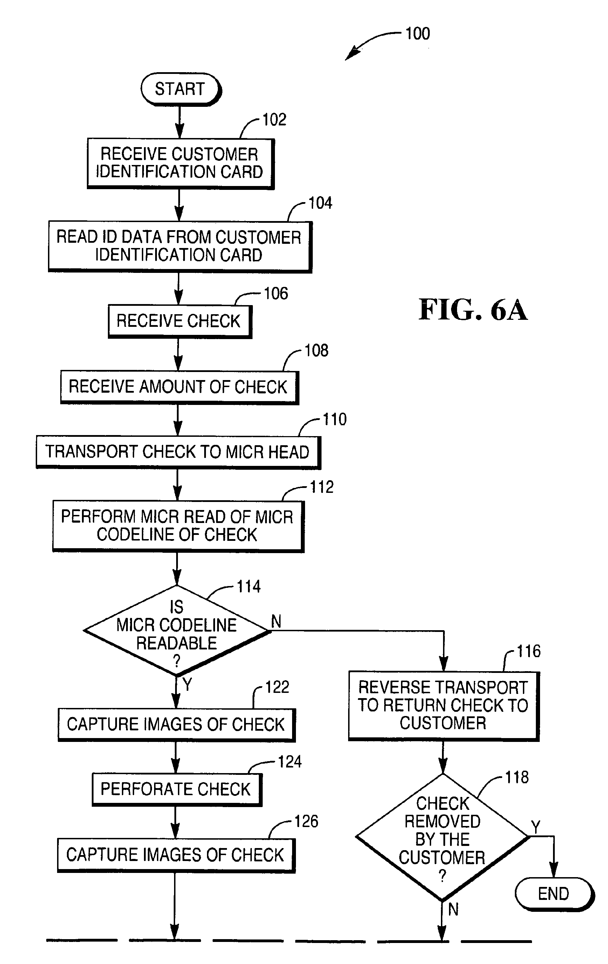

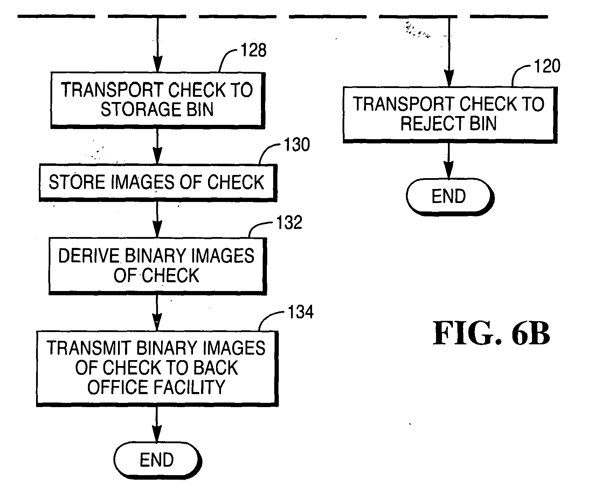

A typical check depositing transaction will now be described with reference to Fig. 6 which is a flowchart 100 illustrating the steps involved in a check depositing transaction, and also with reference to Figs. 1, 2, and 3. In this transaction, the ATM customer enters a customer identification card into the card reader slot 46 (steps 102 and 104), selects "check depositing" from a list of transaction options presented on the display 36, enters the amount of the check via the keyboard 34, and inserts the check to be deposited through the check input/output slot 52 (step 106). The controller 76 receives the amount of the check (step 108). The infeed unit 62 receives the check and transports the check to the inlet 63 of the transport unit 64. The transport mechanism 70 of the transport unit 64 receives the check and transports the check (step 110) to the MICR head 72 where the MICR codeline on the check is read (step 112).

A determination is made (step 114) as to whether the MICR codeline can be read from the check. If the MICR codeline data from the check is unreadable as determined in step 114, then a check return operation is initiated. When this occurs, the transport mechanism 70 reverses the direction of transport (step 116) to convey the check to the check input/output slot 52 to return the check to the ATM customer via the check input/output slot. The controller 76 may monitor the slot 52 to ensure that the check has been removed by the ATM customer (step 118). If the ATM customer has not removed the check within a predetermined time period, the check is retracted and conveyed to the reject bin 79 (step 120).

However, if the MICR codeline data from the check is readable as determined in step 114, then the transport mechanism 70 transports the check to the imager 74, where both sides of the check are imaged (step 122). The perforator mechanism 80 perforates the check (step 124) in a manner as described hereinabove to cancel the check. The perforated check is then transported to the imager 74 to image the perforated check (step 126) before it is transported through the outlet 67 to the storage bin 78 of the pocket unit 66 (step 128) for subsequent collection and further processing. Although the above describes both steps 122 and 126 being performed, it is conceivable that only one of these steps be performed. Preferably, step 122 is performed, and step 126 is optionally performed.

The captured check images are stored in the image data memory 75 (step 130). The captured check images may be grayscale images or binary images, for examples. The check images may be stored locally to the ATM 10. For example, the check images may be stored on an ATM hard drive located within the ATM 10 for a period of time determined by the financial institution.

If the captured check images are not binary images, then binary images are derived from the images of the check (step 132). A front binary image is derived from the front image, and a rear binary image is derived from the rear image. Techniques to derive binary images are known. The binary images derived in step 132 are electronically transmitted to the back office facility of an institution (step 134), such as a financial institution in the form of a bank, for further processing at the back office facility. This institution may or may not own the particular ATM at which the check has been deposited.

It should be apparent that the perforator mechanism 80 is being used in place of a conventional endorser printer to endorse the check to cancel the check so that the check cannot be re-presented for depositing or cashing. The endorsement is in the form of a pattern of openings in the check instead of in the form of an ink-printed endorsement. The pattern of openings in the check may spell any number of words which convey the same fixed information as an ink-printed endorsement. The perforator mechanism 80 may be changed for different formats of fixed information. As an example, if the ATM 10 changes hands, the perforator mechanism 80 may need to be changed. The perforator mechanism 80 requires no print carriage, ink, or ink supplies such as ribbons or print heads. Accordingly, the perforator mechanism 80 would not require any ongoing maintenance of these items.

It should also be apparent that the pattern of openings in the check would not be subject to ink problems, such as ink smearing, ink drying out, or faintness due to ribbons having gone faint. Moreover, a check with punched openings is likely to be more visible than a check with an ink-printed endorsement on it. The punched openings are readily visible from both sides of the check, whereas an ink-printed endorsement would be visible from only one side of the check. The relatively higher visibility of the punched openings should be helpful to a bank teller in identifying such a check and thereby in preventing a re-presentment of the check for depositing or cashing.

It should also be apparent that perforating a check as described hereinabove to physically cancel a check is different from other ways of physically cancelling a check. For example, perforating a check is different from shredding a check. A perforated check remains relatively intact and legible, whereas a shredded check is neither intact nor legible. The intactness and legibility of the perforated check would be useful in case a problem arises with capturing images of the check. Moreover, a perforated check takes up much less storage space in an ATM than a shredded check.

Although the above description describes the perforating mechanism 80 as comprising the perforator roller 86 and the receiving roller 88, and co-operating to provide openings in a check as the check is being transported between the two rollers, it is conceivable that different structures of a perforator mechanism may be used to provide openings in a check. For example, a different perforator mechanism may comprise different types of rollers or different types of projections for perforating a check. As another example, a perforator mechanism may comprise members other than rollers or other than projections in the form of pins or studs to provide openings in a check. The perforator mechanism 80 described in the above description is one embodiment.

Although the above description describes the perforating mechanism 80 as being used in place of an endorser printer, it is conceivable that the perforating mechanism be used in addition to an endorser printer, depending upon the needs of the particular application. In this case, such an endorser printer may be positioned along the document track 65 upstream from the perforator mechanism 80. Alternatively, the endorser printer may be positioned along the document track 65 downstream from the perforator mechanism 80.

Although the above description describes a pattern of openings which form a number of words which are readable from one side of the check, it is conceivable that the projections 82 on the perforator roller 86 be configured and laid out such that words formed by one pattern of openings can be read from one side of the check, and words formed by another pattern of openings can be read from the other side of the check. As an example, the projections 82 can be configured and laid out such that the word "VOID" appears along the length of the check and is readable from one side of the check, and the word "CANCELED" appears alternately with the word "VOID" along the same length of the check but is readable from the other side of the check. As another example, the projections 82 can be configured and laid out such that the word "VOID" appears along one lengthwise strip portion of the check and is readable from one side of the check, and the word "CANCELED" appears along another lengthwise strip portion of the check and is readable from the other side of the check. It should be apparent that if some words can be read from one side of the check and other words can be read from the other side of the check, then orientation of the check as the check passes through the perforator mechanism 80 does not matter.

Further, although the above-description describes a check being deposited in its entire amount by an ATM customer, it is conceivable that the check may be deposited only in partial amount of the entire amount of the check at the ATM 10, with the remaining amount of the check being cashed and delivered to the ATM customer. Checks may be of different sizes, different thicknesses, or different weights of paper.

Also, although the above-description describes the PERSONAS (trademark) 6676 NCR ATM embodying the present invention, it is conceivable that other models of ATMs, other types of ATMs, or other types of self-service check depositing terminals may embody the present invention. Self-service depositing terminals are generally public-access devices that are designed to allow a user to conduct a check deposit transaction in an unassisted manner and/or in an unattended environment. Self-service check depositing terminals typically include some form of tamper resistance so that they are inherently resilient.

The particular arrangements disclosed are meant to be illustrative only and not limiting as to the scope of the invention. From the above description, those skilled in the art to which the present invention relates will perceive improvements, changes and modifications. Numerous substitutions and modifications can be undertaken without departing from the true spirit and scope of the invention. Such improvements, changes and modifications within the skill of the art to which the present invention relates are intended to be covered by the appended claims.

## Claims

1. A method of operating an image-based check depositing terminal, the method comprising:
capturing an image of a physical check provided by a user at the check depositing terminal; and
perforating the physical check after the image of the check has been captured.

2. A method according to claim 1, wherein the perforating includes punching a pattern of openings in the physical check.

3. A method according to claim 2, wherein the pattern of openings in the physical check is a series of holes in the physical check.

4. A method according to claim 3, further comprising:
transmitting the image of the check to an institution.

5. A method according to claim 4, wherein the image of the check comprises a grayscale image of the check.

6. A method according to claim 4, wherein the image of the check comprises a binary image of the check.

7. A method according to claim 4, wherein (i) the institution comprises a back office facility of a bank, and (ii) the image-based check depositing terminal comprises a check depositing automated teller machine (ATM) which is located remote from the back office facility of the bank.

8. An apparatus for use in an image-based check depositing terminal, the apparatus comprising:
an imaging camera for capturing an image of a physical check which has been deposited at the check depositing terminal; and
a perforator for punching a series of openings in the physical check after the image of the check has been captured.

9. An apparatus according to claim 8, further comprising:
means for transmitting the image of the check to an institution.

10. An apparatus according to claim 9, further comprising (i) a number of check storage bins, and (ii) a check transport mechanism for transporting a physical check to a check storage bin after the imaging camera has captured an image of the check.
